# EUROPÄISCHE PATENTSCHRIFT

(11) **EP 1 046 328 B1**
(45) Veröffentlichungstag und Bekanntmachung des Hinweises auf die Patenterteilung: **06.09.2006**
(21) Anmeldenummer: 00108630.5
(22) Anmeldetag: 20.04.2000
(51) Int. Cl.: A01B 27/00, A01B 29/04, A01B 29/06

(54) **Bodenbearbeitungsgerät**
Soil-working implement
Outil pour le travail du sol

(30) Priorität: 23.04.1999 DE 19918412
(43) Veröffentlichungstag der Anmeldung: 25.10.2000
(73) Patentinhaber: Kerner, Josef, D-89344 Aislingen (DE)
(72) Erfinder: Kerner, Josef, D-89344 Aislingen (DE)
(74) Vertreter: Gallo, Wolfgang

(56) Entgegenhaltungen:
- EP-A- 0 373 711
- EP-A- 0 741 959
- EP-A- 0 761 078
- DE-A- 3 219 373

## Beschreibung

Die Erfindung betrifft ein Bodenbearbeitungsgerät in Form einer Walze aus axial beabstandeten Walzensegmenten mit zwischen den Walzensegmenten angeordneten Zinken zum Zerkleinern und Einebnen der Schollen unter gleichzeitigem Rückverfestigen des Bodens.

Ein derartiges Bodenbearbeitungsgerät ist beispielsweise aus der EP 0 761 078 A1 bekannt. Dieses bekannte Gerät besteht aus einem Rahmen, einer Walze mit einer Mehrzahl von um eine horizontale Achse drehbaren und mit axialen Abständen axial nebeneinander angeordneten Walzensegmenten, und aus in den Zwischenräumen zwischen den benachbarten Walzensegmenten angeordneten Zinken. Die Zinken sind, bezogen auf die Arbeitsrichtung des Geräts, unter flachem Anstellwinkel schräg rückwärts abfallend angeordnet, und zwar derart, daß ihre hinteren Enden deutlich hinterhalb der Drehachse der Walzensegmente den Boden erreichen. Gehaltert werden diese Zinken durch Arme, die an einem Querrohr befestigt sind, das sich vor oder hinter der Walze befindet. Die Walzensegmente selbst bestehen vorzugsweise aus einem äußeren Ring, der ein Keilförmiges oder rechteckiges Querschnittsprofil haben kann und über eine Anzahl radialer Speichen mit einer Nabe verbunden ist.

Das beschriebene bekannte Gerät wird überwiegend bei Grubbern zur Stoppelbearbeitung und als Frontbagger eingesetzt. Bei diesen Anwendungen ist der zu bearbeitende Boden meist grobschollig, und die Bearbeitung erfolgt im oberen Bereich des Bodens. Die Arbeitsweise ist bei diesen Anwendungen sehr gut und auch verstopfungsfrei. Wird dieses Gerät allerdings hinter Kreiseleggen oder gezogenen Eggenkombinationen eingesetzt, treten vor allem bei leichten und nassen Böden häufig Verstopfungen auf, die dadurch bedingt sind, daß die Walze tiefer einsinkt und sich deshalb die Speichenzwischenräume mit Erdreich verfüllen können. Ein seitliches Verkleiden der Walzensegmente, wie dies als geschlossene Bauart von Walzensegmenten an sich bekannt ist, kann diese Problematik allerdings nur teilweise beseitigen, da bei tieferem Einsinken der Walze und nassen Böden das Erdreich an den seitlichen Verkleidungen anhaftet und diese anhaftende Erde dann im Bereich der Zinkenhalterungen zu großen Reibwiderständen führt und die Drehbewegung der Walze stark beeinträchtigt oder sogar ganz blockiert.

Aus der EP-0 373 711 Al ist ein Bodenbearbeitungsgerät mit einer Kreiselegge und einer dieser nachfolgenden Walze aus axial beabstandeten Walzensegmenten bekannt. Die Walzensegmente sind auf einem sie verbindenden Innenrohr angeordnet und haben jeweils spiralartig verlaufende Speichen zwischen Innenrohr und Radreifen oder bei einer Ausführungsform mit Seitenwänden spiralig verlaufende vertiefungen in den Seitenwänden, und zwischen den benachbarten Walzensegmenten sind Übertragarme, die mit dem Rahmen des Geräts verbunden sind, Abstreifer angeordnet, die, in Arbeitsrichtung des Geräts gesehen, schräg vorwärts ansteigend zum Walzeninnenrohr hin verlaufen. An den hinteren Enden der Abstreifer sind aus Draht gebogene Elemente in Gestalt von Drahtwendeln befestigt, die in einem kurzen, steil nach hinten abwärts ragenden Drahtstück endigen, das in den Boden eingreifen soll.

Der Erfindung liegt die Aufgabe zugrunde, ein Bodenbearbeitungsgerät der Eingangs genannten Bauart so auszubilden, daß es auch bei nasser Erde eine einwandfreie und störungsfreie Bodenbearbeitung ermöglicht, ohne daß die Rollbewegung der Walze durch Anhaften des Erdreich an den Zinkenhalterungen oder anderen Stellen gebremst oder gar blockiert wird.

Diese Aufgabe wird erfindungsgemäß durch die im Patentanspruch 1 angegebene Ausbildung eines gattungsgemäßen Bodenbearbeitungsgeräts gelöst. Die Unteransprüche beinhalten vorteilhafte Weiterbildungen der Erfindung.

Erfindungsgemäß sind also an den vorderen Bereichen der Zinken Abstreifer angeordnet, die, bezogen auf die Arbeitsrichtung des Geräts, schräg vorwärts steigend in Richtung zum Walzeninnenrohr hin verlaufen.

Besonders wesentlich bei dem erfindungsgemäßen Bodenbearbeitungsgerät in Form einer Ackerwalze mit integrierten Zerkleinerungswerkzeug ist das gleichzeitige Abstreifen von anhaftendem Erdreich im Bereich des Walzeninnenrohrs und der Seitenflächen der Walzensegmente und das anschließende Zerkleinern der Schollen am Walzenaustritt. Die Anordnung der Zinkenelemente unter einem flachen Arbeitswinkel sowie das deutlich hinter der Walzenachse liegende und den Boden erreichende Ende der Zinken, das Voraussetzung für eine störungs- und verstopfungsfreie Funktion ist und dem Gerät eine ziehende Charakteristik verleiht, kann somit beibehalten werden. Die Stirnseite des Abstreifers kann je nach Einsatzbedingungen bzw. Bodenbeschaffenheit unmittelbar hinter der Walzenachse zum Walzeninnenrohr hin verlaufen, oder bei extrem leichten oder tiefgründigen Böden, bei denen diese Walze tiefer einsinkt, auch vorderhalb der Walzenachse zum Walzeninnenrohr hin verlaufen. Gerade die letztere Ausführung erlaubt ein großes Einsatzspektrum für die unterschiedlichsten Arbeitsbedingungen hinsichtlich Tragkraft und Bodenbeschaffenheit.

Ein weiterer Vorteil der Erfindung ist, daß sich keine Fremdkörper zwischen den Walzensegmenten festsetzen können.

Besonders vorteilhaft ist die erfindungsgemäß vorgesehene Befestigung des Abstreifers direkt am Zinken, da diese Teile beide einem Verschleiß unterliegen und dann gemeinsam und somit schneller ausgetauscht werden können.

Bei leichten Böden und besonderen Anwendungsbereichen, wo der Schwerpunkt auf dem Abstreifen bzw. Niederhalten des Erdreichs zwischen den Walzensegmenten liegt, kann statt gesonderter Ausbildung der beiden Bauteile Abstreifer und Zinken ein Zinken, der mindestens in seinem vorderen Bereich mit einer flachen Form ausgebildet ist, als integriertes Zinken/Abstreiferbauteil beide Funktionen übernehmen.

Die Bauteile Abstreifer und Zinken können aus Metall, Kunststoff oder auch aus einer Kombination dieser Werkstoffe bestehen.

Zusätzlich kann ein weiterer Abstreifer am Haltestiel der Zinken vorgesehen sein, der ein radial noch breiteres Ausräumen der Walzensegmente im Laufflächenbereich bzw. im laufflächennahen Bereich sowie auch als Schutz für den Zinkenhaltestiel dient.

Die Haltestiele bzw. Tragarme für die Zinken können je nach Einbauerfordernissen mit einem hinterhalb der Walze liegenden Querrohr oder in gebogener oder gekröpfter Ausführung nach vorne verlaufen und dort mit einem Querrohr verbunden sein.

Ein weiteres wesentliches Merkmal ist der Aufbau der Walzensegmente. Die Walze insgesamt besteht aus einem Innenrohr als die Walzensegmente tragendes Element, und aus den axial benachbart und beabstandet angeordneten Walzensegmenten, die jeweils eine stabile Lauffläche haben, an beiden Seiten durch Scheiben geschlossen sind, und auf der Lauffläche vorzugsweise einen wellenförmigen Außenring tragen.

Diese Konstruktion erlaubt eine leichte Bauweise, denn die Lauffläche der Walzenringe, die besonders der Gefahr von Verformungen und Verschleiß durch Steine und dgl. ausgesetzt sind, können stabil und aus dickem Material gefertigt werden, während die nur der Verkleidung dienenden seitlichen Scheiben aus dünnerem Material hergestellt sein können. Ein wellenförmiger Außenring, gegebenenfalls mit zusätzlichen Querstegen, verbessert das Abrollverhalten und hinterläßt insbesondere bei schweren und nassen Böden eine bessere Bodenstruktur.

Die Walzensegmente können aber auch aus formgestanzten und tiefgezogenen Halbschalen zusammengesetzt sein, die am Umfang miteinander verschweißt sind. Im übrigen können die Walzensegmente je nach den gestellten Anforderungen, also beispielsweise nach den Bodenverhältnissen am Einsatzort, aus verschiedenen Materialien oder Formteilen hergestellt sein.

Einige Ausführungsbeispiele der Erfindung sind in den anliegenden Zeichnungen dargestellt und werden nachstehend mehr im einzelnen beschrieben. In den Zeichnungen zeigt:
- Fig. 1: im Querschnitt eine erste Ausführungsform des Bodenbearbeitungsgeräts,
- Fig. 2: im Querschnitt eine zweite Ausführungsform des Bodenbearbeitungsgeräts,
- Fig. 3: eine dritte Ausführungsform des Bodenbearbeitungsgeräts,
- Fig. 4: einen Axialschnitt durch ein Walzensegment mit einer herausgezeichneten Einzelheit des Walzenumfangs, und
- Fig. 5: eine vierte Ausführungsform des Bodenbearbeitungsgeräts.

Es versteht sich, daß alle Zeichnungen nur schematisch gehalten sind und keine konstruktiven Einzelheiten, sondern den grundsätzlichen Aufbau des erfindungsgemäßen Bodenbearbeitungsgeräts verdeutlichen sollen.

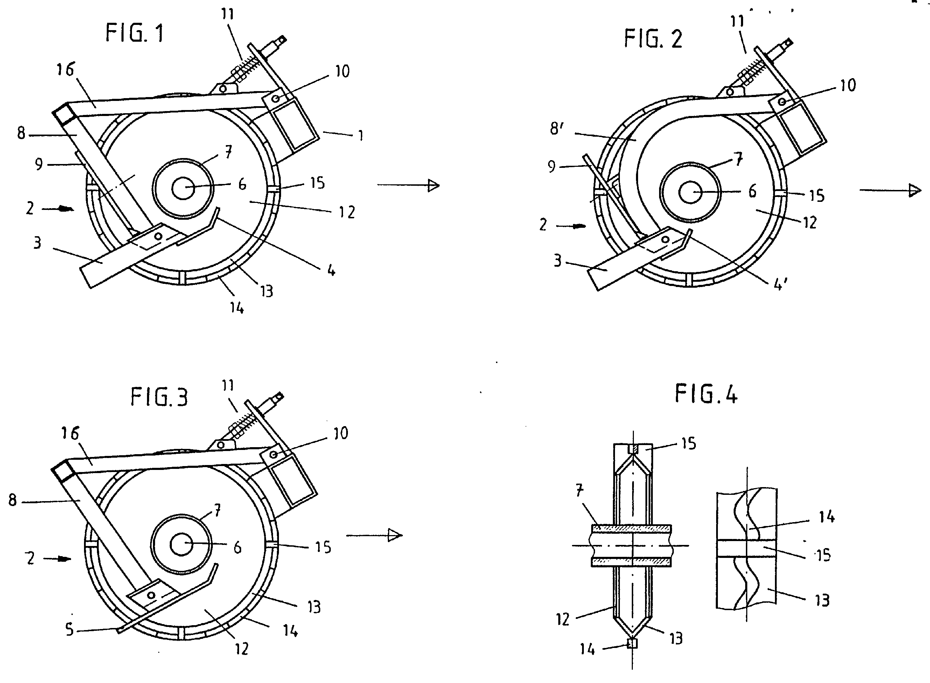

Wie aus den Zeichnungen hervorgeht, besteht das Bodenbearbeitungsgerät aus einem Rahmen 1, einer Ackerwalze in Form einer Mehrzahl von axial nebeneinander und mit gegenseitigem Abstand angeordneten Walzensegmenten 2, die auf einem als tragendes Element dienenden Walzeninnenrohr 7 mit Achszapfen 6 angeordnet sind, und aus zwischen den Walzensegmenten angeordneten Zinken 3 mit jeweils einem Abstreifer 4 bzw. 4' bzw. aus integrierten Zinken/Abstreifern 5, die über Tragarme 8 bzw. 8' (Fig. 2) mit dem Rahmen 1 verbunden sind. Dabei sind die Tragarme 8 bzw. 8' jeweils über ein Drehgelenk 10 und über einen gefederten Niederhalter 11 mit dem Rahmen 1 verbunden, damit bei Hindernissen wie beispielsweise größeren Steinen im Boden ein gewisses Ausweichen der Zinken zur Vermeidung einer Beschädigung oder Zerstörung derselben möglich ist.

Bei den Ausführungsformen nach den Fig. 1, 3 und 5 sind die Tragarme 8 für die Zinken als gerade Arme ausgebildet, die jeweils mit ihrem oberen Ende durch einen hinterhalb der Walze (die Arbeitsrichtung ist in den Fig. 1 bis 3 und 5 jeweils durch einen Pfeil angegeben) angeordneten Querträger miteinander verbunden, wobei der Querträger bei den Ausführungsbeispielen als Vierkantrohr dargestellt ist; es kann sich auch um ein U-Profil handeln. Der Querträger ist seinerseits über geradlinig oder auch anderweitig geformte Längsträger 16 jeweils mit einem am Rahmen 1 angeordneten Gelenk 10 verbunden.

Bei der Ausführungsform nach Fig. 2 sind die Zinkentragarme 8' bogenförmig ausgebildet und verlaufen direkt zum Rahmen 1 hin, der vorderhalb der Walze angeordnet ist, und an dem sie wiederum jeweils über ein Gelenk 10 angelenkt sind.

Die Zinken 3 bzw. 5 oder 5' verlaufen bei allen vier Ausführungsformen nach den Fig. 1 bis 3 und 5 unter flachem Anstellwinkel schräg nach hinten (bezogen auf die Arbeitsrichtung des Geräts) abfallend, so daß sie deutlich hinterhalb mit ihren hinteren Enden den Boden erreichen.

Bei der in Fig. 1 dargestellten Ausführungsform ist der Abstreifer 4 am vorderen Ende des Zinken 3 befestigt und erstreckt sich in seinem vorderen Teil bis, in Arbeitsrichtung des Geräts gesehen, bis vorderhalb des Walzeninnenrohrs 7 und überdeckt den wesentlichen radialen Bereich der Seitenflächen der Walzensegmente.

Bei der in Fig. 2 dargestellten Ausführungsform ist der Abstreifer 4' am vorderen Teil des Zinken frei befestigt und ragt mit seinem vorderen Ende direkt zum Walzeninnenrohr 7 hin und überdeckt wiederum im wesentlichen den gesamten radialen Bereich der Seitenscheiben der Walzensegmente.

Bei der in Fig. 3 dargestellten Ausführungsform ist der Zinken 5 selbst als Abstreifer ausgebildet, indem der Zinken entsprechend flach ausgebildet ist. Er hat in seinem als Abstreifer wirkenden Bereich einen ähnlichen Verlauf wie bei der Ausführungsform nach Fig. 1. Im hinteren bodennahen Bereich kann der Zinken/Abstreifer 5 schmaler und zinkenartiger ausgebildet sein oder auch eine durchgehend breite Form haben, was von der Art des zu bearbeitenden Boden abhängt.

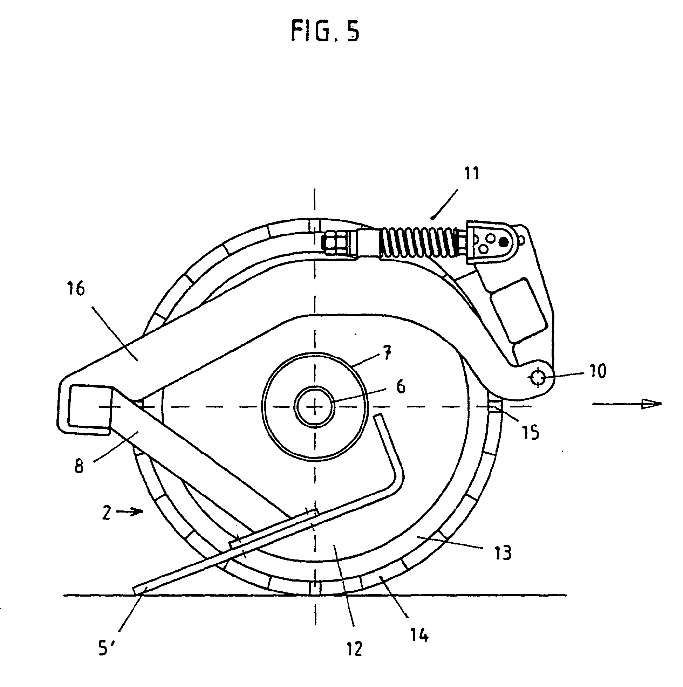

Bei der Ausführungsform nach Fig. 5 sind die Zinken bzw. Abstreifer 5' von unten am jeweiligen Tragarm 8 befestigt und vorne stärker abgewinkelt, d.h. der nach vorne schräg aufwärts verlaufende Teil ist weiter nach vorne geführt und dann etwa rechtwinklig nach oben und leicht rückwärts bis vorderhalb des Walzeninnenrohrs 7 geführt. Fig. 5 zeigt eine typische Ausführungsform, bei welcher die Zinken bzw. Abstreifer 5' nicht nur aus Metall, sondern auch aus Kunststoff bestehen können.

Bei allen vier Ausführungsformen ist der Abstreifer 5 bzw. 4' bzw. 5 bzw. 5' in seinem vorderen Bereich nach oben abgebogen, wie aus den Zeichnungen ersichtlich. Der Abstreifer verhindert jeweils, daß sich etwa vor der Walze wellenförmig aufbauendes Material in den Walzensegmentzwischenräumen festsetzt und führt das abgestreifte Material vorderhalb des hinteren, auf den Boden einwirkenden Zinkenendes auf den Boden zurück, so daß abgestreifte Brocken mitzerkleinert und der angestrebten Rückverfestigung des Bodens zugeführt werden.

Es versteht sich, daß der Abstreifer bei den Ausführungsformen nach den Fig. 1 und 2 insbesondere nach hinten auch eine größere Ausdehnung haben kann, als dies aus den Zeichnungen hervorgeht.

Bei den Ausführungsformen nach den Fig. 1 und 2 ist ergänzend auch ein weiterer Abstreifer 9 vorgesehen, der an der Rückseite des Tragarms 8 bzw. 8' des Zinken 3 angeordnet ist und dem breiteren Ausräumen der Walzensegmente im äußersten Bereich, also im Laufflächenbereich, dient.

Fig. 4 zeigt im Axialschnitt den Aufbau eines Walzensegments auf dem Walzeninnenrohr 7. Danach hat das Walzensegment einen die Lauffläche bildenden umfangsmäßigen Reifen 13 mit pfeilförmigen Profil, und die Stirnwände sind durch Scheiben 12 gebildet und damit geschlossen ausgeführt. Zwischen dem Walzensegmentstreifen 13 und dem Innenrohr 7 können nach Bedarf Speichen zur radialen Abstützung bzw. Verstärkung vorgesehen sein, oder diese Funktion kann durch die entsprechende dimensionierten Wandscheiben 12 wahrgenommen werden. Die Walzensegmentstreifen sind gemäß Fig. 4 was auch aus den übrigen Zeichnungsfiguren ersichtlich ist, mit einem aufgesetzten wellenförmigen Außenring 14 versehen, der in Umfangsabständen durch zusätzliche Querstege 15 ergänzt sein kann. Rechts neben der Fig. 4 ist als Einzelheit ein Umfangsabschnitt des Walzensegmentstreifens herausgezeichnet, der den wellenförmigen Außenring und einen Quersteg 15 auf dem Walzensegmentstreifen zeigt.

## Patentansprüche

1. Bodenbearbeitungsgerät mit folgenden Merkmalen:
a) es hat einen Rahmen (1),
b) es hat eine Walze, bestehend aus einer Mehrzahl axial beabstandeter Walzensegmente (2), die durch ein Walzeninnenrohr (7) miteinander verbunden sind und jeweils einen eine stabile Lauffläche bildenden Reifen (13) und durch Scheiben (12) gebildete geschlossene Seitenwände aufweisen,
c) in den Zwischenräumen zwischen den benachbarten Walzensegmenten (2) sind Zinken (3) angeordnet, die unter flachem Anstellwinkel hinterhalb der Walzenachse, bezogen auf die Arbeitsrichtung des Geräts, schräg rückwärts abfallend zum Boden verlaufen und mit Tragarmen (8, 8') verbunden sind, die jeweils gelenkig (10) am Rahmen (1) befestigt sind,
d) am vorderen Bereich der Zinken (3) ist jeweils ein Abstreifer (4) angeordnet der, bezogen auf die Arbeitsrichtung des Geräts, schräg vorwärts ansteigend zum Walzeninnenrohr (7) hin verläuft und den Zwischenraum zwischen den Seitenwänden (12) der jeweils benachbarten Walzensegmente (2) überbrückt.

2. Gerät nach Anspruch 1, **dadurch gekennzeichnet, daß** der Abstreifer (4) jeweils direkt am Zinken (3) befestigt ist.

3. Gerät nach Anspruch 1, **dadurch gekennzeichnet, daß** Zinken und Abstreifer als einteiliges Bauteil (5 bzw. 5') ausgebildet sind, das mindestens in seinem vorderen Bereich als Abstreifer mit entsprechender Breite ausgebildet ist.

4. Gerät nach einem der Ansprüche 1 bis 3, **dadurch gekennzeichnet, daß** der Abstrifer (4, 5, 5') einen nach oben abgeknickten vorderen Endteil aufweist.

5. Gerät nach Anspruch 4, **dadurch gekennzeichnet, daß** der Abstreifer sich bis vorderhalb der Walzenachse erstreckt und mit seinem nach oben abgebogenen vorderen Endteil zum vorderen Bereich des Walzeninnenrohrs hin verläuft.

6. Gerät nach einem der Ansprüche 1 bis 5, **dadurch gekennzeichnet, daß** die Zinken mit Abstreifer jeweils über Tragarme (8) mit dem Rahmen (1) verbunden sind, die hinterhalb des Walzeninnenrohrs (7) im hinteren Walzenbereich nach oben und dann vorwärts bis zum Rahmen verlaufen.

7. Gerät nach Anspruch 6, **dadurch gekennzeichnet, daß** die Tragarme (8) mit zusätzlichen Abstreifern (9) versehen sind.

8. Gerät nach Anspruch 6 oder 7, **dadurch gekennzeichnet, daß** die Tragarme (8) federbelastet (11) am Rahmen befestigt sind.

9. Gerät nach einem der Ansprüche 1 bis 8, **dadurch gekennzeichnet, daß** die Walzensegmente (2) aus einem Reifen (13) mit vorzugsweise pfeilförmigem Profil und die Seitenwände (12) bildenden Ringscheiben (12) bestehen, und daß auf dem Außenumfang des Reifens (13) ein umlaufender gewellter Steg (14) angeordnet ist.

10. Gerät nach Anspruch 9, **dadurch gekennzeichnet, daß** zusätzlich zu dem gewellten Steg (14) umfangsmäßig beabstandete Querstege (15) am Reifenumfang angeordnet sind.

## Claims

1. Soil-working implement having the following features:
a) said implement comprises a frame (1),
b) said implement comprises a roller, consisting of a multiplicity of roller segments (2) which are spaced apart axially, are connected to each other through a roller inner tube (7) and respectively have a tyre (13) which constitutes a stable running surface, and closed side walls constituted by discs (12),
c) there are disposed, in the gaps between the adjacent roller segments (2), tines (3) which, in relation to the working direction of the implement, slope obliquely backwards towards the soil at a flat angle of inclination behind the roller axis and are connected to support arms (8, 8') which are respectively fixed to the frame (1) in an articulated manner (10),
d) there is respectively disposed, at the front region of the tines (3), a wiper (4) which, in relation to the working direction of the implement, rises obliquely forwards towards the roller inner tube (7) and bridges the gap between the side walls (12) of the respectively adjacent roller segments (2).

2. Implement according to claim 1, **characterized in that** the wiper (4) is in each case fixed directly on to the tine (3).

3. Implement according to claim 1, **characterized in that** the tines and wipers are realized as a single-part component (5 and 5') which is realized, at least in its front region, as a wiper of appropriate width.

4. Implement according to any one of claims 1 to 3, **characterized in that** the wiper (4, 5, 5') has a front end portion which is bent upwards.

5. Implement according to claim 4, **characterized in that** the wiper extends to in front of the roller axis, and its upwardly bent front end portion extends towards the front region of the roller inner tube.

6. Implement according to any one of claims 1 to 5, **characterized in that** the tines with wipers are respectively connected to the frame (1) via support arms (8) which, behind the roller inner tube (7), in the rear region of the roller, extend upwards and then forwards to the frame.

7. Implement according to claim 6, **characterized in that** the support arms (8) are provided with additional wipers (9).

8. Implement according to either of claims 6 or 7, **characterized in that** the support arms (8) are fixed to the frame in a spring-loaded (11) manner.

9. Implement according to any one of claims 1 to 8, **characterized in that** the roller segments (2) consist of a tyre (13) having a preferably arrow-shaped profile and of ring discs (12) which constitute the side walls (12), and a continuous ridged web (14) is disposed on the outer circumference of the tyre (13).

10. Implement according to claim 9, **characterized in that** circumferentially spaced transverse webs (15) are disposed, in addition to the ridged web (14), on the tyre circumference.

## Revendications

1. Outil pour le travail du sol, comportant les caractéristiques suivantes :
a) il a un châssis (1),
b) il a un rouleau comprenant une pluralité de segments de rouleau (2) écartés dans le sens axial, qui sont reliés entre eux par un tube intérieur de rouleau (7) et présentent chacun un bandage (13) formant une surface de roulement stable et des parois latérales fermées formées par des disques (12),
c) dans les intervalles entres les segments de rouleau voisins (2) sont disposées des dents (3) qui s'étendent vers le sol inclinées à l'oblique vers l'arrière avec un angle d'attaque plat à l'arrière de l'axe du rouleau, rapporté à la direction de travail de l'outil, et sont reliées à des bras de support (8, 8') qui sont fixés chacun de manière articulée (10) sur le châssis (1),
d) dans la zone avant des dents (3) est disposé chaque fois un racleur (4) qui, rapporté à la direction de travail de l'outil, s'étend en montant à l'oblique vers l'avant vers le tube intérieur de rouleau (7) et surmonte l'intervalle entre les parois latérales (12) des différents segments de rouleau voisins (2).

2. Outil selon la revendication 1, **caractérisé en ce que** le racleur (4) est fixé chaque fois directement sur la dent (3).

3. Outil selon la revendication 1, **caractérisé en ce que** dent et racleur sont réalisés en tant que composant en une seule pièce (5, respectivement 5') qui est réalisé au moins dans sa partie avant en tant que racleur avec une largeur correspondante.

4. Outil selon l'une des revendications 1 à 3, **caractérisé en ce que** le racleur (4, 5, 5') présente une partie terminale avant pliée vers le haut.

5. Outil selon la revendication 4, **caractérisé en ce que** le racleur s'étend jusque devant l'axe du rouleau et s'étend avec sa partie terminale avant pliée vers le haut en direction de la zone avant du tube intérieur de rouleau.

6. Outil selon l'une des revendications 1 à 5, **caractérisé en ce que** les dents avec racleur sont reliées chacune au châssis (1) par l'intermédiaire de bras de support (8) qui s'étendent derrière le tube intérieur de rouleau (7), dans la zone de rouleau arrière vers le haut et puis vers l'avant jusqu'au châssis.

7. Outil selon la revendication 6, **caractérisé en ce que** les bras de support (8) sont munis de racleurs supplémentaires (9).

8. Outil selon la revendication 6 ou 7, **caractérisé en ce que** les bras de support (8) sont fixés sur le châssis en étant chargés par ressort (11).

9. Outil selon l'une des revendications 1 à 8, **caractérisé en ce que** les segments de rouleau (2) sont composés d'un bandage (13) avec un profil de préférence en forme de flèche et de disques annulaires (12) formant les parois latérales (12) et **en ce qu'**une entretoise ondulée périphérique (14) est disposée sur la périphérie extérieure du bandage (13).

10. Outil selon la revendication 9, **caractérisé en ce que**, en supplément de l'entretoise ondulée (14), des entretoises transversales (15) distantes sur la périphérie sont disposées sur la périphérie du bandage.
